# EUROPÄISCHE PATENTANMELDUNG

(11) **EP 1 513 036 A2**
(43) Veröffentlichungstag der Anmeldung: **09.03.2005**
(21) Anmeldenummer: 04015986.5
(22) Anmeldetag: 07.07.2004
(51) Int. Cl.: G05B 19/408

(54) **Einrichtung zur Regelung und/oder Steuerung von Antrieben bei Werkzeug- oder Produktionsmaschinen**

(30) Priorität: 28.08.2003 DE 10339731
(71) Anmelder: SIEMENS AKTIENGESELLSCHAFT, 80333 München (DE)
(72) Erfinder: Becker, Arnd, 91056 Erlangen (DE); Heidl, Thomas, 90579 Langenzenn (DE); Heinemann, Gerhard, Dr., 91058 Erlangen (DE)

(57) **Zusammenfassung**

Die Erfindung betrifft eine Einrichtung (5) zur Regelung und/oder Steuerung von Antrieben (17,18,23,24) bei Werkzeugoder Produktionsmaschinen, wobei die Einrichtung (5) ein Tracemodul (7) aufweist, wobei nach einer Triggerung des Tracemoduls Prozessistgrößen vom Tracemodul (7) aufzeichenbar und daraufhin in Form von Dateien (30) in einem Standarddateiformat auf einen der Einrichtung (5) zugehörigen nichtflüchtigen Speichermedium (10) dauerhaft speicherbar sind. Die Einrichtung (5) ermöglicht somit von einer Tracefunktionalität insbesondere einem Tracemodul (7) aufgezeichnete Prozessistgrößen dauerhaft in einem Standarddatenformat in der Einrichtung (5) zur Regelung und/oder Steuerung von Antrieben (17,18,23,24) dauerhaft zu speichern.

## Beschreibung

Einrichtung zur Regelung und/oder Steuerung von Antrieben bei Werkzeug- oder Produktionsmaschinen

Die Erfindung bezieht sich auf eine Einrichtung zur Regelung und/oder Steuerung von Antrieben bei Werkzeug- oder Produktionsmaschinen.

Jedem Antrieb einer Werkzeug- oder Produktionsmaschine, welcher z.B. aus einem Motor mit einem angeschlossenen Getriebe und einer Last bestehen kann, ist heute in der Technik üblicherweise eine Einrichtung zur Regelung und/oder Steuerung zugeordnet, wobei mit einer solchen Einrichtung auch mehrere Motoren gleichzeitig geregelt bzw. gesteuert werden können.

Von einem optimalen dynamischen Verhalten der Regelung und/ oder Steuerung der Antriebe bei Werkzeug- oder Produktionsmaschinen hängen sowohl die Effizienz als auch die Qualität bei nahezu allen Antriebsaufgaben direkt ab. Es ist daher wünschenswert, über eine geeignete Testfunktionalität zur Sicherstellung des gewünschten Regelungs- und/oder Steuerverhaltens der Maschine zu verfügen.

Eine handelsübliche Einrichtung zur Regelung und/oder Steuerung von Antrieben bei Werkzeug- oder Produktionsmaschinen verfügt zur Durchführung von Tests über ein internes Tracemodul zum Aufzeichnen von Signalen sowie über einen internen Signalgenerator. Mit Hilfe des Signalgenerators werden hierzu Testsignale als Anregegrößen auf die Regel- und/oder Steuerfunktionen der Einrichtung aufgeschaltet. Bei den Testsignalen kann es sich z.B. um die Sprunganregung eines Sollwertes für die Regelung handeln. Hierbei sind bei handelsüblichen Funktionsgeneratoren nur einige wenige Kurvenformen, wie z.B. Sprung, digitales Rauschen, Sinus und deren Parameter (Amplitude, Offset, Periodendauer etc.) vom Anwender wählbar. Zur Durchführung eines Tests werden über ein Triggersignal, das z.B. von einem externen Diagnose/Inbetriebnahmegerät erzeugt werden kann, das Tracemodul sowie der Funktionsgenerator getriggert, wobei der Funktionsgenerator die oben erwähnten vorparametrierten Kurvenformen auf die Regel- und/oder Steuerfunktion der Einrichtung aufschaltet und von dem Tracemodul ebenfalls durch Parametrierung vordefinierte Prozessistgrößen wie z.B. Signale von externen Gebern oder beliebige Signale innerhalb der Regel- und/oder Steuerfunktion der Einrichtung nach Triggerung aufzeichnet. Anschließend kann der Anwender z.B. die im Tracemodul flüchtig gespeicherten Prozessistgrößen auf das Diagnose-/Inbetriebnahmegerät herunterladen und dort auswerten, wobei die Signalverläufe in Form von Binärdateien, ohne Verwendung eines standardisiertes Dateiformates, gespeichert werden.

Eine weitere bekannte Testfunktion ist der sogenannte Kreisformtest, der nur im Verbund mit einer eventuell vorhandenen übergeordneten Steuerung ausgeführt werden kann. In der übergeordneten Steuerung wird hierzu eine kartesische Kreisbahn mittels eines Anwenderprogramms erzeugt. Bei Anwahl des Kreisformtest konfiguriert die übergeordnete Steuerung das Tracemodul und triggert bzw. startet es, während das Anwenderprogramm abläuft. Eine exakte Synchronisierung zwischen Anwenderprogramm und Tracemodul existiert jedoch nicht. Vielmehr muss der Anwender zunächst das Anwenderprogramm starten, dass das Durchfahren eines kontinuierlich laufenden Kreises beinhaltet und anschließend den Kreisformtest aktivieren. Der Kreisformtest vergleicht automatisch den Sollkreis und den Istkreis und ermittelt die maximalen Abweichungen. Die Abweichungen werden auf der Bedienoberfläche der Steuerung angezeigt, können jedoch nicht direkt von einer überlagerten Automatisierungsebene oder Internetdiensten weiterverarbeitet werden.

Da der oben angegebene Kreistest nur einen speziellen Test der Qualitätsüberprüfung einer Werkzeug- oder Produktionsmaschine darstellt und nicht überall angewendet werden kann, ist im allgemeinen die Fertigung von Testwerkstücken üblich um die Genauigkeit und Dynamik der Maschine zu verifizieren. Da ein Testwerkstück in seiner räumlichen Ausdehnung normalerweise begrenzt ist, wird hiermit das Verhalten der Maschine nur in einem entsprechend kleinen Teil des Arbeitsraums der Maschine überprüft.

Weil, wie schon oben erwähnt, die vom Tracemodul aufgezeichneten Prozessistgrößen nicht dauerhaft und außerdem auch in keinem Standarddateiformat gespeichert werden, sondern zuerst auf ein externes Inbetriebnahme/Diagnosegerät gespielt werden müssen, ist eine Auswertung vom Anwender ob z.B. die Schwankungsbreite einer Istdrehzahl bei einer Änderung der Solldrehzahl noch in einem zulässigen Rahmen bleibt oft nicht mehr möglich, da z.B. während der Inbetriebnahme der Maschine aufgezeichnete Prozessreferenzgrößen für einen Vergleich gar nicht mehr vorhanden sind. Weiterhin ist grundsätzlich die Problematik vorhanden, dass für eine umfassende Auswertung immer ein solches Inbetriebnahme/Diagnosegerät an die Einrichtung zur Regelung und/oder Steuerung von Antrieben angeschlossen werden muss.

Der Erfindung liegt die Aufgabe zugrunde, von einer Tracefunktionalität insbesondere einem Tracemodul aufgezeichnete Prozessistgrößen dauerhaft in einem Standartdatenformat in der Einrichtung zur Regelung und/oder Steuerung von Antrieben dauerhaft zu speichern.

Diese Aufgabe wird für eine Einrichtung der eingangs genannten Art dadurch gelöst, dass die Einrichtung ein Tracemodul aufweist, wobei nach einer Triggerung des Tracemoduls, Prozessistgrößen vom Tracemodul aufzeichenbar und daraufhin in Form von Dateien in einem Standarddateiformat auf einem der Einrichtung zugehörigen nicht flüchtigen Speichermedium dauerhaft speicherbar sind.

Eine erste vorteilhafte Ausbildung der Erfindung ist dadurch gekennzeichnet, dass zu jeder Datei oder innerhalb jeder Datei der Zeitpunkt der Triggerung und/oder die zum Zeitpunkt der Triggerung vorhandene Parametrierung der Regelung und/ oder Steuerung der Einrichtung im Speichermedium mit abspeicherbar ist. Hierdurch wird sichergestellt, dass zu jeder Datei der Zeitpunkt der Triggerung sowie die zum Triggerzeitpunkt gültige Parametrierung ebenfalls dauerhaft gespeichert wird und solchermaßen die Testbedingungen und Testabläufe zu jedem beliebigen späteren Zeitpunkt vollständig reproduzierbar sind. Insbesondere wenn eine Triggerung des Tracemoduls in Folge eines aufgetretenen Fehlers angestoßen wird, sind solche zusätzlichen Daten hinsichtlich einer späteren Fehleranalyse von großer Bedeutung.

Ferner erweist es sich als vorteilhaft, dass die Dateinamen der gespeicherten Dateien durch einen automatischen oder programmierbaren Algorithmus erzeugbar sind. Hierdurch wird sichergestellt, dass im nichtflüchtigen Speichermedium jede aufgezeichnete Datei einen eigenen separaten Dateinamen erhält. Die bei den verschiedenen Test abgespeicherten Dateien können somit z.B. leichter wieder dem entsprechend korrespondierenden Test zugeordnet werden.

Ferner erweist es sich als vorteilhaft, dass die gespeicherten Dateien gegen Löschen oder Veränderung sicherbar sind um eine unbeabsichtigte oder willentliche Löschung oder Veränderung von Dateien zu verhindern. Ein solcher Schutz kann z.B. mittels eines Passwortes sichergestellt werden.

Weiterhin erweist es sich als vorteilhaft, dass das Speichermedium eine Flashkarte ist, da eine Flashkarte in der Technik ein weit verbreitetes Standardspeichermedium darstellt.

Ferner erweist es sich als vorteilhaft, dass das Triggern des Tracemoduls über ein extern an die Einrichtung angeschlossenes Diagnose-/Inbetriebnahmegerät vornehmbar ist, da ein Diagnose-/Inbetriebnahmegerät üblicherweise bei Tests an der Maschine zur Verfügung steht.

Eine weitere vorteilhafte Ausbildung der Erfindung ist dadurch gekennzeichnet, dass das Triggern des Tracemoduls aus dem Bewegungsprogramm einer übergeordneten Steuerung heraus erfolgt. Wenn das Triggern des Tracemoduls aus den Bewegungsprogramm einer übergeordneten Steuerung heraus folgen kann, können Prozessistgrößen an beliebigen Stellen des Bewegungsprogramms bzw. eines Bewegungsvorgangs aufgezeichnet und dauerhaft gespeichert werden.

Weiterhin erweist es sich als vorteilhaft, dass mehrere Einrichtungen untereinander oder mit einer übergeordneten Steuerung derart verbindbar sind, dass die Tracemodule der Einrichtungen zeitsynchron triggerbar sind. Auf diese Weise wird sichergestellt, dass mit Hilfe eines einzigen Triggersignals die Tracemodule von verschiedenen Einrichtungen zur Regelung und/oder Steuerung vor Antrieben gleichzeitig triggerbar sind.

Eine weitere vorteilhafte Ausbildung der Erfindung ist dadurch gekennzeichnet, dass die Einrichtung zusätzlich einen triggerbaren Funktionsgenerator aufweist, wobei vom Funktionsgenerator zusätzlich im Speichermedium in Form von Dateien in einem Standarddateiformat gespeicherte Testsignale auf Regel- und/oder Steuerfunktionen der Einrichtung aufschaltbar sind. Auf diese Art und Weise können dem Funktionsgenerator beliebige Testsignale zum Testen der Regel- und/oder Steuerfunktion der Einrichtung vorgegeben werden.

Ferner erweist es sich als vorteilhaft, dass der Funktionsgenerator gleichzeitig mit dem Tracemodul triggerbar ist, da dann Funktionsgenerator und Tracemodul zeitsynchron arbeiten.

Ferner erweist es sich die Erfindung von Vorteil, dass das Triggern des Funktionsgenerators über ein extern an die Einrichtung angeschlossenes Diagnose-/Inbetriebnahmegerät vornehmbar ist, da ein Diagnose-/Inbetriebnahmegerät üblicherweise bei Tests an der Maschine zur Verfügung steht.

Weiterhin erweist es sich als vorteilhaft, dass das Triggern des Funktionsgenerators aus einem Anwenderprogramm einer übergeordneten Steuerung erfolgt, da solchermaßen an beliebigen Stellen des Anwenderprogramms bzw. an beliebigen Stellen im Bewegungsablauf der Maschine ein Triggern des Funktionsgenerators und damit ein Aufschalten von Testsignalen auf die Regel- und/oder Steuerfunktion der Einrichtung aufschaltbar ist.

Eine weitere vorteilhafte Ausbildung der Erfindung ist dadurch gekennzeichnet, dass mehrere Einrichtungen untereinander oder mit einer übergeordneten Steuerung derart verbindbar sind, dass die Funktionsgeneratoren der Einrichtungen zeitsynchron triggerbar sind, da dann mit Hilfe eines einzigen Triggersignals alle Funktionsgeneratoren gleichzeitig aktiviert werden können.

Eine weitere vorteilhafte Ausbildung der Erfindung ist dadurch gekennzeichnet, dass zusätzlich im Speichermedium Prozessreferenzgrößen in Form von Dateien mit Standardformat speicherbar sind, wobei in einer Auswerteeinheit die Prozessreferenzgrößen mit den Prozessistgrößen vergleichbar sind und mittels Auswertefunktionen auswertbar sind. Dadurch dass im Prinzip beliebige Prozessistgrößen mit Prozessreferenzgrößen vergleichbar sind und mittels Auswertefunktion auswertbar sind, kann eine besonders gute Testfunktionalität erzielt werden und Fehler solchermaßen sicher und zuverlässig erkannt werden.

Weiterhin erweist es sich als vorteilhaft, dass die Dateien, welche die Prozessreferenzgrößen beinhalten, extern erstellbar und auf das Speichermedium herunterladbar sind. Dies erlaubt z.B. das beliebige Erstellen von Prozessreferenzgrößen auf einem externen Rechner.

Weiterhin erweist es sich als vorteilhaft, dass als Ergebnis der Auswertung die Auswerteeinheit dem Anwender ein Güteparameter zur Verfügung stellt. Ein Güteparameter erlaubt dem Anwender eine besonders leichte und übersichtliche Auswertung von Testergebnissen.

Ferner erweist es sich als vorteilhaft, dass die Prozessistgrößen und/oder die Prozessreferenzgrößen und/oder die Testsignale und/oder die Parametrierung und/oder die Ergebnisse der Auswertung einer überlagerten Automatisierungsebene und/oder Internetdienste verfügbar gemacht werden. Hierdurch wird gewährleistet, dass eine Auswertung auch auf einer überlagerten Automatisierungsebene und/oder von Internetdiensten wie z.B. vom Hersteller durchgeführt werden können.

Weiterhin erweist es sich als vorteilhaft, dass auswählbare Parametersätze zur Konfiguration des Tracemoduls und/oder des Funktionsgenerators im Speichermedium speicherbar sind. Dies erlaubt dem Anwender leicht mittels Auswahl von verschiedenen Parametersätzen verschiedene Signale den Regel- und/oder Steuerfunktion der Einrichtung zur Anregung vorzugeben oder verschiedene Prozessistgrößen aufzuzeichnen.

Weiterhin erweist es sich als vorteilhaft, wenn als Standarddateiformat ein auf ein FAT16-Format, ein FAT32-Format, ein NTFS-Format oder ein ASCII-Format basierendes Dateiformat vorgesehen ist, da dies Standarddateiformate sind, welche in der Technik weit verbreitet sind und von vielen handelsüblichen Programm gelesen und bearbeitet werden können.

Ein Ausführungsbeispiel der Erfindung ist in der Zeichnung dargestellt und wird im folgenden näher erläutert. Dabei zeigen:
- FIG 1: eine erfindungsgemäße Einrichtung zur Regelung und/oder Steuerung von Antrieben mit angeschlossenen Komponenten und
- FIG 2: eine Auswertung von Prozessistgrößen mittels Prozessreferenzgrößen.

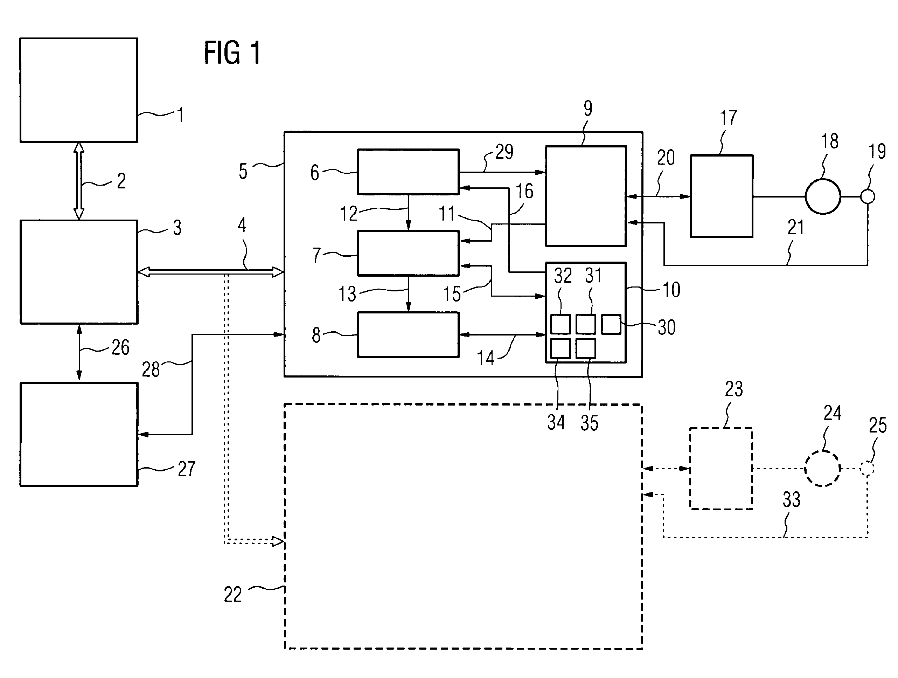

In FIG 1 ist in Form eines Blockschaltbildes eine erfindungsgemäße Einrichtung 5 zur Regelung und/oder Steuerung von Antrieben nebst einer möglichen angeschlossenen Peripherie dargestellt. Die erfindungsgemäße Einrichtung 5 besitzt in dem Ausführungsbeispiel einen Funktionsgenerator 6, ein Tracemodul 7, ein Auswertemodul 8, ein Regel- und Steuermodul 9 sowie ein nichtflüchtiges Speichermedium 10, das in dem Ausführungsbeispiel in Form einer Flashkarte vorliegt. Der Funktionsgenerator 6, das Tracemodul 7, das Auswertemodul 8 sowie das Regel- und Steuermodul 9 können im Falle eines mikroprozessorgesteuerten Systems in Form von reinen Softwaremodulen bzw. als Softwarebausteine vorliegen oder aber auch in Form von Hardware realisiert sein.

Auf dem nichtflüchtigen Speichermedium 10 sind Dateien 30 mit Prozessistgrößen, Dateien 31 mit Testsignalen, Dateien 32 mit Prozessreferenzgrößen, Parametrierdateien 34 und Dateien 35 mit Güteparametern gespeichert. Das Regel- und Steuermodul 9 regelt bzw. steuert über eine Verbindung 20 einen Umrichter 17, der wiederum einen Motor 18 speist bzw. steuert. Am Motor 18 befindet sich ein Geber, der für das Regel- und Steuermodul 9, über die Verbindung 21 die Istdrehzahl des Motors zur Verfügung stellt. Eine solche Istdrehzahl ist ein Beispiel für eine Prozessistgröße.

In dem Ausführungsbeispiel ist die erfindungsgemäße Einrichtung 5 über eine Busanbindung 4 mit einer übergeordneten Steuerung 3 verbunden. Gegebenenfalls kann die erfindungsgemäße Einrichtung 5 noch weitere Komponenten außer den eingezeichneten Komponenten 6, 7, 8, 9 und 10 enthalten, die jedoch der Übersichtlichkeit halber nicht dargestellt sind. Die übergeordnete Steuerung 3 ist über die Busanbindung 4 mit den Komponenten 6, 7, 8, 9 und 10 zum Austausch von Daten verbunden, was der Übersichtlichkeit halber in FIG 1 nicht explizit dargestellt ist. Im Normalbetrieb gibt die übergeordnete Steuerung 3 über die Busanbindung 4 dem Regel- und Steuermodul 9 Sollwerte zur Regelung z.B. des Motors 18 vor. Zur Erzeugung der Sollwerte für das Regel- und Steuermodul 9 läuft in der übergeordneten Steuerung 3 ein Anwenderprogramm ab. Die übergeordnete Steuerung 3 ist über eine Verbindung 2 zum Austausch von Daten mit einer überlagerten Automatisierungsebene 1 verbunden. Es ist jedoch genau so gut denkbar, dass die übergeordnete Steuerung 3 zusätzlich oder alternativ über eine Internetverbindung zum Datenaustausch über das Internet mit Internetdiensten wie z.B. dem Hersteller der Maschine verbunden ist. In diesem Falle wäre die Verbindung 2 als eine Internetverbindung ausgeprägt und der mit 1 bezeichnete Kasten würde z.B. einen Internetdienst darstellen.

Weiterhin ist ein Diagnose-/Inbetriebnahmegerät 27 über eine Verbindung 28 mit der erfindungsgemäßen Einrichtung 5 verbunden. Über die Verbindung 28 kann, was der Übersichtlichkeit halber in FIG 1 nicht explizit dargestellt ist, das Diagnose-/Inbetriebnahmegerät 27 auf alle Komponenten der Einrichtung 5 wie z.B. den Funktionsgenerator 6, das Tracemodul 7, das Ausgabemodul 8, das Regel- und Steuermodul 9 sowie das Speichermedium 10 zugreifen und Daten austauschen. Alternativ kann das Diagnose-/Inbetriebnahmegerät 27 auch über eine Verbindung 26 mit der übergeordneten Steuerung 3 verbunden sein um über die Busverbindung 4 auf alle Komponenten der Einrichtung 5 zugreifen zu können.

Zum Testen der Regel- und Steuerfunktion des Regel- und Steuermoduls 9 können vom Funktionsgenerator 6 über die Verbindung 29 beliebige Testsignale an vom Anwender definierbaren Stellen auf die Regel- und Steuerfunktion des Regel- und Steuermoduls 9 aufgeschaltet werden und solchermaßen die Regel und Steuerfunktionalität der Einrichtung 5 getestet werden. Die Form und der Verlauf der Testsignale können vom Anwender frei vorgegeben werden und sind in den Dateien 31, im Speichermedium 10 abgelegt. Der Funktionsgenerator 6 greift vor Erzeugung seiner Testsignale auf die Datei 31 auf der die Testsignale definiert sind, zu. Dies geschieht über die Verbindung 16. Alternativ ist auch die Verwendung vordefinierter Testsignale wie eine Sprungfunktion, Dreieckfunktion oder eine Sinusfunktion möglich, wobei deren genaue Ausprägungen durch Parameter wie Amplitude, Frequenz und Offset definiert sind.

Das Tracemodul 7 dient zum Aufzeichnen von Prozessistgrößen. Als Prozessistgrößen sind dabei beliebige vom Regel- und Steuermodul 9 innerhalb der Regel- und Steuerfunktion anfallende Signale, Signale von externen Gebern sowie vom Funktionsgenerator 7 erzeugte Testsignale zu verstehen. Über die Verbindungen 12 und 11 werden dem Tracemodul 7 die Prozessistgrößen zur Aufzeichnung zur Verfügung gestellt. Nach Aufzeichnung der Größen legt das Tracemodul 7 über die Verbindung 15 eine bzw. mehrere Dateien 30 mit den aufgezeichneten Prozessistgrößen ab. Über eine oder mehrere Parametrierdateien 34 kann der Anwender definieren, welche Testsignale vom Funktionsgenerator 6 erzeugt bzw. welche Prozessistgrößen vom Tracemodul 7 aufgezeichnet werden sollen. Diese Information wird dem Funktionsgenerator 6 über die Verbindung 16 und dem Tracemodul 7 über die Verbindung 15 ebenfalls zur Verfügung gestellt.

Um den Startzeitpunkt der Erzeugung der Testsignale im Funktionsgenerator 6 und den Startzeitpunkt für die Aufzeichnung der Prozessistgrößen im Tracemodul 7 zu definieren, besitzen sowohl Funktionsgenerator 6 als auch das Tracemodul 7 einen unabhängigen Triggereingang, der in FIG 1 der Übersichtlichkeit halber nicht dargestellt ist. Die Triggerung von Funktionsgenerator 6 und Tracemodul 7 kann über das Diagnose-/Inbetriebnahmegerät 27, über die Verbindung 28 bzw. 26 vorgenommen werden, als auch von der übergeordneten Steuerung 3 über die Busanbindung 4 initiiert werden. Um später verschiedene aufgezeichnete Prozessistgrößen möglichst exakt miteinander vergleichen zu können, ist ein zeitsynchrones, d.h. gleichzeitiges Triggern von Funktionsgenerator 6 und Tracemodul 7 erforderlich. Um eine allgemeine und flexible Triggerung von Tracemodul 7 und Funktionsgenerator 6 durch die übergeordnete Steuerung 3 zu ermöglichen, ist die Busverbindung 4 in Form eines echtzeitfähigen Datenbusses realisiert. Hierzu ist die Schnittstelle zwischen übergeordneter Steuerung 3 und Antriebsgerät 5 für den Anwender als eine offengelegte echtzeitfähige zyklische Datenschnittstelle realisiert.

Alternativ ist auch eine Triggerung möglich, bei der die Triggersignale innerhalb der Einrichtung 5, z.B. durch Vergleich mit einer Triggerschwelle, erzeugt werden.

Aus dem auf der übergeordneten Steuerung 3 ablaufenden Anwenderprogramm können an beliebigen vom Anwender definierbaren Stellen heraus, durch zeitsynchrone Ansteuerungen dieser Schnittstelle, eine exakte zeitliche Synchronisierung von Anwenderprogramm und Triggerung des Funktionsgenerators 6 und des Tracemoduls 7 erzielt werden. Da mit einem Anwenderprogramm praktisch beliebig komplexe Bewegungsabläufe vorgegeben werden können, können bei Verwendung eines Speichermediums 10 mit großer Kapazität, eine große Anzahl von Dateien 30 mit Prozessistgrößen bzw. große Datenmengen abgespeichert werden. Hierdurch werden umfangreiche Tests an der Maschine ermöglicht. Hierzu kann z.B. auch nur das Tracemodul 7 getriggert werden, während der Funktionsgenerator 6 außer Funktion bleibt. Weiterhin lässt sich z.B. auch das Testen eines sogenannten virtuellen Werkstücks ermöglich, bei dem ausgehend von den aufgezeichneten Gebersignalen kontrolliert wird, ob die Sollgrößen innerhalb eines gewissen Toleranzbandes abgefahren wurden ohne dass ein physikalisch vorhandenes Werkstück in der Maschine tatsächlich bearbeitet wurde.

Das Tracemodul 7 kann aber auch von der erfindungsgemäßen Einrichtung 5 selbst oder der übergeordneten Steuerung 3 bei Auftreten von Fehlern getriggert werden um eine spätere Fehleranalyse zu ermöglichen.

Für Test, bei denen dynamische Vorgänge geprüft werden sollen, können die entscheidenden Prozessistgrößen zunächst mittels dem Tracemodul 7 aufgezeichnet und im Speichermedium 10 in Form von Dateien 30 mit Prozessistgrößen abgelegt werden. Mit Hilfe eines angeschlossenen Diagnose-/Inbetriebnahmegerätes 27 bzw. alternativ mit der übergeordneten Steuerung 3 können diese Prozessistgrößen dann heruntergeladen werden und visualisiert werden. Ein Anwender, insbesondere ein geschulter Anwender kann nun die Signalverläufe der Prozessistgrößen analysieren, bewerten und eine Aussage darüber treffen, ob die Signalverläufe das gewünschte Verhalten aufweisen. Anschließend können die Prozessistgrößen dann auf dem Speichermedium 10 in Form von Dateien 32 als Prozessreferenzgrößen für z.B. nachfolgende automatische Test herangezogen werden.

Die Speicherung auf dem nichtflüchtigen Speichermedium 10 erfolgt dabei für die Dateien 30 mit Prozessistgrößen, Dateien 31 mit Testsignalen, Dateien 32 mit Prozessreferenzgrößen, Parametrierdateien 34 und Dateien mit Güteparametern 35 in einem Standarddateiformat, das z.B. auf ein FAT16-Format, NTFS-Format oder ein ASCII-Format basierend beruht. Dies hat den großen Vorteil, dass die Größe und die Anzahl der gespeicherten Dateien nur von dem zur Verfügung stehenden Speicherplatz im Speichermedium 10 begrenzt wird und weiterhin ein einfacher standardisierter Zugriff auf die Dateien von der übergeordneten Steuerung 3 oder vom Diagnose-/Inbetriebnahmegerät 27 ermöglicht wird.

Während das Tracemodul 7 dazu genutzt wird, die charakteristischen Prozessistgrößen eines Vorgangs aufzuzeigen, kann der Funktionsgenerator 6 dazu genutzt werden, Testsignale wie z.B. Anregesignale in das Regel- und Steuermodul 9 einzuspeisen, um z.B. Störungen, Lasten oder Bearbeitungsvorgänge zu simulieren. Es stehen hierfür innerhalb des Regel- und Steuermoduls 9 vom Anwender definierbare Punkte zur Verfügung, an denen diese Signale eingespeist werden können. Beispiele für solche Signale wären Drehzahlsollwert, Drehmomentsollwert oder auch ein Spannungssollwert. Um eine Verallgemeinerung der möglichen Kurvenform erzielen zu können, können jedoch auch dem Funktionsgenerator 6 Signale, die im Speichermedium 10 in Form von Dateien 31 mit Testsignalen gespeichert sind, als zu generierende Testsignale vorgegeben werden.

Bei der Inbetriebnahme einer Maschine können Prozessreferenzgrößen als Dateien 32 in dem Speichermedium 10 hinterlegt werden. Später aufgenommene Prozessistgrößen die als Dateien 30 in dem Speichermedium 10 hinterlegt werden können dann mit den Prozessreferenzgrößen verglichen werden. Um diesen Vorgang zertifizierungsfest zu machen, werden zu jeder Datei oder innerhalb jeder Datei auf dem Speichermedium auch Datum und Uhrzeit der Messung abgespeichert bzw. der Triggerzeitpunkt abgespeichert sowie den augenblicklichen Parametrierzustand der Regelung und/oder der Steuerung der Einrichtung mit abgespeichert. Dies kann z.B. in Form eines verifizierbaren Stempels geschehen. Über diese zusätzlichen Daten kann dann nachvollzogen werden, ob zwischen verschiedenen Messungen Änderungen an der Parametrierung vorgenommen wurden. Weiterhin kann ein Bezug zur Parametrierungsversion hergestellt werden die z.B. in dem Diagnose-/Inbetriebnahmegerät gespeichert sein kann. Über geeignete Passwortmechanismen lassen sich die Dateien gegen unbefugte oder unbeabsichtigte Veränderungen schützen.

Mit Hilfe des Auswertemoduls 8 können die Prozessistgrößen mit den Prozessreferenzgrößen verglichen werden. Verschiedene Auswertefunktionen des Auswertemoduls 8 stellen dabei mehrere über Parameter auswählbare Vergleichsoperationen zur Verfügung. Denkbar sind hierbei z.B. die Methode der kleinsten Fehlerquadrate oder die maximale absolute Abweichung, die über ein definiertes Zeitfenster innerhalb der aufgezeichneten Signale ermittelt werden. Als Ergebnis einer solchen Auswertung kann das Auswertemodul 8 z.B. ein Güteparameter ausgeben, der dem Anwender ein Maß für die Güte der Regel- und Steuerungsfunktionalität bzw. des Fertigungsprozesses oder der Fertigungsgenauigkeit zur Verfügung steht. Das Auswertemodul 8 legt dann einen solchen Güteparameter über die Verbindung 14 zusammen mit Datum und Uhrzeit im Speichermedium 10 ab. Durch Herunterladen der Datei 35 bzw. der Dateien 35 mit Güteparametern auf das Inbetriebnahme-/Diagnosegerät 27 oder auf die übergeordnete Steuerung 3 kann der Anwender nun eine historische Entwicklung der Güte ableiten bzw. die historische Entwicklung der Güte analysieren.

Weiterhin ist es auch möglich, dass ein solcher Test in zyklischen oder vom Anwender programmierbaren Zeitabständen von der erfindungsgemäßen Einrichtung 5 selbstständig initiiert wird und solchermaßen die Datei/Dateien 35 mit Güteparametern fortlaufend erweitert wird. Es ist daher auch denkbar, dass bei Unterschreiten einer gewissen Güte die erfindungsgemäße Einrichtung 5 bzw. das Auswertemodul 8 einen Alarm auslöst bzw. die Fertigung oder Produktion stoppt.

Es sei an dieser Stelle angemerkt, dass die Dateinamen der im Speichermedium 10 gespeicherten Dateien durch einen automatischen oder programmierbaren Algorithmus, welcher in der Einrichtung 5 integriert ist, erzeugt werden.

Prinzipiell kann die Auswertung wie schon beschrieben, in der Einrichtung 5, im Diagnose-/Inbetriebnahmegerät 27, in der übergeordneten Steuerung oder in der überlagerten Automatisierungsebene 1 bzw. falls vorhanden von an die übergeordnete Steuerung 3 angeschlossen Internetdiensten wie z.B. dem Hersteller durchgeführt werden. Eine Realisierung in der erfindungsgemäßen Einrichtung 5 selbst hat dabei den Vorteil, dass auch autonom arbeitende Einrichtungen 5, die über keine übergeordnete Steuerung 3 verfügen oder auch kein intelligentes Bedienpanel aufweisen die Auswertefunktionalität nutzen können. Es sei an dieser Stelle ausdrücklich darauf hingewiesen, dass die erfindungsgemäße Einrichtung 5 insbesondere bei einfachen Maschinen auch ohne übergeordnete Steuerung 3 voll funktionsfähig ist. Die Sollwerte z.B. zur Regelung des Antriebs sind dann im Regel- und Steuermodul 9 bzw. im Speichermedium 10 hinterlegt.

Weiterhin sei an dieser Stelle angemerkt, dass der Güteparameter indiziert ausgeführt sein kann. So lässt sich leicht z.B. die Entwicklung der Regelgüte über mehrere Testzyklen verfolgen. Bei Betrieb mit übergeordneter Steuerung 3 kann die Berechnung der Auswertefunktion am Ende des Anwenderprogramms angestoßen werden. Der entsprechende Gütewert wird dann automatisch ermittelt und in einem Parameter abgelegt, so dass er in der überlagerten Automatisierungsebene 1 oder bei angeschlossenen Internetdiensten für eine weitere, z.B. automatische Verarbeitung zur Verfügung steht. Auf diese Weise kann z.B. auch eine Telediagnose/Fernwartung ermöglicht werden.

Der Funktionsgenerator 6 und das Tracemodul 7 werden dabei vorzugsweise über Parameter konfiguriert. Diese Parameter legen fest, welche Prozessistgrößen bzw. welche Testsignale vom Funktionsgenerator 6 bzw. vom Tracemodul 7 verwendet werden. Diese Parameter werden häufig verändert, z.B. während der Inbetriebnahme, wenn ein Inbetriebsetzer mit Hilfe von Tracemodul 7 und Funktionsgenerator 6 das Antriebsverhalten optimieren will. Um eine komfortable Konfiguration dieser Parameter für spätere Diagnoseläufe zu ermöglichen, ist es möglich, zwischen verschiedenen vordefinierten Parametrierungen, welche in einer oder mehreren Parametrierdateien 34 abgelegt sind umzuschalten. Die einzelnen Parametersätze können dabei indiziert sein oder es kann für jede Parametrierung eine Parametrierdatei 34 vorhanden sein. Wenn ein bestimmter Parametersatz angewählt und geladen wird, werden hiermit gleichzeitig die korrespondierenden Prozessreferenzgrößen und Gütekriterien im Auswertemodul 8 aktiviert.

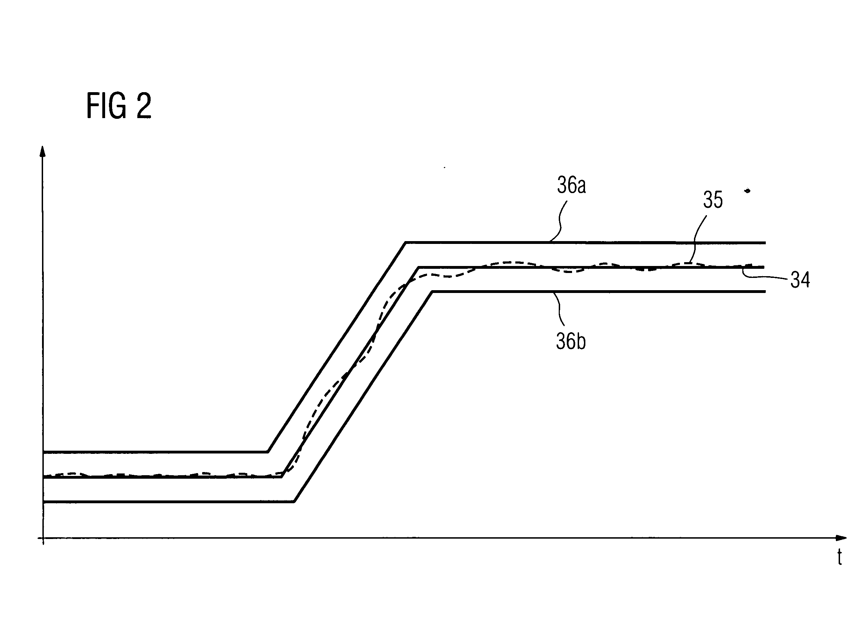

Als Prozessreferenzgrößen, die für den Vergleich benutzt werden können jedoch nicht nur, wie schon erwähnt, ehemalige Prozessistgrößen verwendet werden, sondern es können auch extern erstellte Prozessreferenzgrößen verwendet werden. Ein Beispiel für solche extern erstellte Prozessreferenzgrößen ist in FIG 2 dargestellt.

In FIG 2 ist über der Zeit t ein Testsignal 34, das einen Sprung eines Sollwertes des Regel- und Steuermoduls 9 repräsentiert, dargestellt. Das Prozessistsignal 35, welches vom Tracemodul 7 aufgezeichnet wurde, folgt dem Testsignal 34. Mit Hilfe von zwei Prozessreferenzgrößen 36a und 36b wird eine obere und eine untere Toleranzschwelle für das Prozessistsignal 35 definiert. Bei z.B. einem Überschreiten der Toleranzschwellen nach unten oder nach oben wird z.B. ein Alarm ausgelöst bzw. der Fertigungsprozess oder Bearbeitungsprozess gestoppt.

Es sei an dieser Stelle erwähnt, dass der Umrichter 17 selbstverständlich auch integraler Bestandteil der erfindungsgemäßen Einrichtung 5 zur Regelung- und/oder Steuerung von Antrieben sein kann.

Weiterhin sei an dieser Stelle bemerkt, dass selbstverständlich eine Werkzeug- oder Produktionsmaschine auch mehrere erfindungsgemäße Einrichtungen 5 aufweisen kann, die über eine Busverbindung 4 untereinander verbunden sind oder im Falle des Vorhandenseins einer übergeordneten Steuerung 3 zusätzlich alle noch mit der übergeordneten Steuerung 3 verbunden sind. In FIG 1 ist eine weitere erfindungsgemäße Einrichtung 22, welche mit der erfindungsgemäßen Einrichtung 5 identisch ist, nebst nachgeschalteter Peripherie gestrichelt gezeichnet angedeutet. Die gestrichelt gezeichneten Komponenten bestehen ebenfalls wieder aus einem Umrichter 23, einem Motor 24, einem Geber 25 und einem Prozessistsignal 33 sowie einem gestrichelt gezeichneten Busanschluss. Der Übersichtlichkeit halber wurden dabei die internen Komponenten der erfindungsgemäßen Einrichtung 22 nicht mit eingezeichnet, diese sind jedoch identisch mit den eingezeichneten Komponenten der erfindungsgemäßen Einrichtung 5. Ausgehend von einem zentralen Triggersignal, welches z.B. von der übergeordneten Steuerung 3 oder dem Diagnose-/Inbetriebnahmegerät 27 oder auch von der erfindungsgemäßen Einrichtung 5 initiiert werden kann, können nun alle über die Busverbindung 4 angeschlossenen erfindungsgemäßen Einrichtungen zeitsynchron, d.h. gleichzeitig getriggert werden. In dem Ausführungsbeispiel bei dem nur eine Einrichtung 22 zusätzlich vorhanden ist, würde dann der Funktionsgenerator und das Tracemodul der Einrichtung 22 gleichzeitig mit dem Funktionsgenerator 6 und dem Tracemodul 7 der Einrichtung 5 getriggert werden, so dass auch übergreifende Tests durchgeführt werden können.

Durch die Erfindung können die heute verwendeten einfachen Tests um umfassende systemübergreifende Tests des dynamischen Antriebsverhaltens einer Maschine erweitert werden. Last- und Funktionstest zum Abschluss der Fertigung der Maschine können erweitert und vereinfacht werden, indem das nichtflüchtige Speichermedium mit Funktionsgeneratorkurven und Prozessreferenzgrößen ausgeliefert wird. Die dynamischen Test können dann ohne zusätzliche Hilfsmittel durch eine einfache Parametrierung gestartet und ausgewertet werden. Weiterhin kann der Maschinenhersteller ohne zusätzliche Hilfsmittel aussagekräftige Maschinentest durchführen, z.B. für Abnahme seiner Fertigung oder Übernahmetests bei seinem Kunden. Die Tests lassen sich jederzeit wiederholen und vergleichen z.B. auch nach Softwareupdate oder Austausch von mechanischen Teilen der Maschine. Bei wiederholten Test, die untereinander und z.B. mit einem Referenztest verglichen werden können, können Änderungen im Maschinenverhalten erkannt werden um z.B. frühzeitig Ausfälle erkennen zu können. Da die Testfunktionalität auch aus dem Anwenderprogramm angesteuert werden kann, kann zudem auch eine automatische Produktionsüberwachung vorgenommen werden. Zertifizierte Maschineneigenschaften können jederzeit durch Vergleich mit Prozessreferenzgrößen nachgeprüft werden. Auch wenn an die erfindungsgemäße Einrichtung keine übergeordnete Steuerung oder ein Diagnose-/Inbetriebnahmegerät 27 angeschlossen ist bzw. die Einrichtung 5 keine übergeordnete Steuerung 3 besitzt, erhält der Anwender eine komfortable Diagnosemöglichkeit indem von ihm lediglich ein einzelner Parameter in Form eines Gütekriteriums ausgewertet werden muss. Über den abgespeicherten Zeitpunkt und die Parametrierungsinformationen können die Messergebnisse jederzeit mit den auf dem Diagnose-/Inbetriebnahmegerät abgespeicherten Parametrierungen zugeordnet werden. Hierdurch können Verbesserungen oder Verschlechterungen der Regel- bzw. Steuergüte in Folge von Parameteränderungen sichtbar gemacht und dokumentiert werden. Da sämtliche Diagnosefunktionen auch von einer überlagerten Steuerung aus bedient werden können, ist eine Kopplung mit einer übergeordneten Automatisierungsebene, Internetdiensten oder anderen Ferndiagnose- und Wartungsdiensten möglich.

An dieser Stelle sei angemerkt, dass als Werkzeugmaschinen z.B. ein- oder mehrachsige Dreh-, Fräs-, Bohr- oder Schleifmaschinen zu verstehen sind. Zu den Werkzeugmaschinen werden auch noch Bearbeitungszentren, lineare und rotatorische Transfermaschinen, Lasermaschinen oder Wälz- und Verzahnmaschinen gezählt. Allen gemeinsam ist, dass ein Material bearbeitet wird, wobei diese Bearbeitung mehrachsig ausgeführt werden kann. Zu den Produktionsmaschinen werden z.B. Textil-, Kunststoff-, Holz-, Glas-, Keramik- oder Steinbearbeitungsmaschinen gezählt. Maschinen der Umformtechnik, Verpackungstechnik, Drucktechnik, Fördertechnik, Aufzugstechnik, Pumpentechnik, Lüftertechnik, Transporttechnik sowie Windkrafträder, Hebewerkzeuge und Roboter gehören ebenfalls zu den Produktionsmaschinen.

## Patentansprüche

1. Einrichtung (5) zur Regelung und/oder Steuerung von Antrieben (17,18,23,24) bei Werkzeug- oder Produktionsmaschinen, **dadurch gekennzeichnet, dass** die Einrichtung (5) ein Tracemodul (7) aufweist, wobei nach einer Triggerung des Tracemoduls (7), Prozessistgrößen (11,12) vom Tracemodul (7) aufzeichenbar und daraufhin in Form von Dateien (30) in einem Standarddateiformat auf einem der Einrichtung (5) zugehörigen nicht flüchtigen Speichermedium (10) dauerhaft speicherbar sind.

2. Einrichtung nach Anspruch 1, **dadurch gekennzeichnet, dass** zu jeder Datei (30,31,32, 35) oder innerhalb jeder Datei (30,31,32,35) der Zeitpunkt der Triggerung und/oder die zum Zeitpunkt der Triggerung vorhandene Parametrierung der Regelung und/oder Steuerung (9) der Einrichtung (5) im Speichermedium (10) mit abspeicherbar ist.

3. Einrichtung nach einem der vorhergehenden Ansprüche, **dadurch gekennzeichnet, dass** die Dateinamen der gespeicherten Dateien (30,31,32,34,35) durch einen automatischen oder programmierbaren Algorithmus erzeugbar sind.

4. Einrichtung nach einem der vorhergehenden Ansprüche, **dadurch gekennzeichnet, dass** die gespeicherten Dateien (30,31,32,34,35) gegen Löschen oder Veränderung sicherbar sind.

5. Einrichtung nach Anspruch 1, **dadurch gekennzeichnet, dass** das Speichermedium (10) eine Flashkarte ist.

6. Einrichtung nach einem der vorhergehenden Ansprüche, **dadurch gekennzeichnet, dass** das Triggern des Tracemoduls (7) über ein extern an die Einrichtung angeschlossenes Diagnose-/Inbetriebnahmegerät (27) vornehmbar ist.

7. Einrichtung nach einem der vorhergehenden Ansprüche, **dadurch gekennzeichnet, dass** das Triggern des Tracemoduls (7) aus dem Bewegungsprogramm einer übergeordneten Steuerung (3) heraus erfolgt.

8. Einrichtung nach einem der vorhergehenden Ansprüche, **dadurch gekennzeichnet, dass** mehrere Einrichtungen (5,22) untereinander oder mit einer übergeordneten Steuerung (3) derart verbindbar sind, dass die Tracemodule der Einrichtungen (5,22) zeitsynchron triggerbar sind.

9. Einrichtung nach einem der vorhergehenden Ansprüche, **dadurch gekennzeichnet, dass** die Einrichtung (5) zusätzlich einen triggerbaren Funktionsgenerator (6) aufweist, wobei vom Funktionsgenerator (6) zusätzlich im Speichermedium (10) in Form von Dateien (31) in einem Standarddateiformat gespeicherte Testsignale auf Regel- und/oder Steuerfunktionen (9) der Einrichtung (5) aufschaltbar sind.

10. Einrichtung nach Anspruch 9, **dadurch gekennzeichnet, dass** der Funktionsgenerator (6) gleichzeitig mit dem Tracemodul (7) triggerbar ist.

11. Einrichtung nach Anspruch 9 oder 10, **dadurch gekennzeichnet, dass** das Triggern des Funktionsgenerators (6) über ein extern an die Einrichtung (5) angeschlossenes Diagnose-/Inbetriebnahmegerät (27) vornehmbar ist.

12. Einrichtung nach Anspruch 9 oder 10, **dadurch gekennzeichnet, dass** das Triggern des Funktionsgenerators (6) aus einem Anwenderprogramm einer übergeordneten Steuerung (3) heraus erfolgt.

13. Einrichtung nach einem der Ansprüche 9 bis 12, **dadurch gekennzeichnet, dass** mehrere Einrichtungen (5,22) untereinander oder mit einer übergeordneten Steuerung (3) derart verbindbar sind, dass die Funktionsgeneratoren der Einrichtungen (5,22) zeitsynchron triggerbar sind.

14. Einrichtung nach einem der vorhergehenden Ansprüche, **dadurch gekennzeichnet, dass** zusätzlich im Speichermedium (10) Prozessreferenzgrößen in Form von Dateien (32) mit Standartformat speicherbar sind, wobei in einer Auswerteeinheit (8) der Einrichtung (5) die Prozessreferenzgrößen mit den Prozessistgrößen vergleichbar sind und mittels Auswertefunktionen auswertbar sind.

15. Einrichtung nach Anspruch 14, **dadurch gekennzeichnet, dass** die Dateien (32) welche die Prozessreferenzgrößen beinhalten extern erstellbar und auf das Speichermedium (10) herrunterladbar sind.

16. Einrichtung nach Anspruch 14, **dadurch gekennzeichnet, dass** als Ergebnis der Auswertung die Auswerteeinheit (8) dem Anwender ein Güteparameter zur Verfügung stellt.

17. Einrichtung nach einem der vorhergehenden Ansprüche, **dadurch gekennzeichnet, dass** die Prozessistgrößen und/oder die Prozessreferenzgrößen und/oder die Testsignale und/oder die Parametrierung und/oder die Ergebnisse der Auswertung einer überlagerten Automatisierungsebene (1) und/oder Internet-Diensten (1) verfügbar gemacht werden.

18. Einrichtung nach einem der vorhergehenden Ansprüche, **dadurch gekennzeichnet**, das auswählbare Parametersätze zur Konfiguration des Tracemoduls (7) und/oder des Funktionsgenerators (6) im Speichermedium (10) speicherbar sind.

19. Einrichtung nach einem der vorhergehenden Ansprüche, **dadurch gekennzeichnet, dass** als Standarddateiformat ein auf ein FAT16-Format, ein FAT32-Format, ein NTFS-Format oder ein ASCII-Format basierendes Dateiformat vorgesehen ist.
